# FASCICULE DE BREVET EUROPEEN

(11) **EP 0 545 743 B1**
(45) Date de publication et mention de la délivrance du brevet: **05.07.1995**
(21) Numéro de dépôt: 92402866.5
(22) Date de dépôt: 20.10.1992
(51) Int. Cl.: B60N 2/00

(54) **Agencement pour le montage et le verrouillage d'un siège de véhicule automobile**
Anordnung zum Befestigen und Verriegeln eines Kraftfahrzeugsitzes
Mounting and locking arrangement for a car seat

(30) Priorité: 29.11.1991 FR 9114840
(43) Date de publication de la demande: 09.06.1993
(73) Titulaire: AUTOMOBILES PEUGEOT, 75116 Paris (FR); AUTOMOBILES CITROEN, 92200 Neuilly-sur-Seine (FR)
(72) Inventeur: Normand, Jean, F-78440 Drocourt (FR)
(74) Mandataire: Polus, Camille

(56) Documents cités:
- EP-A- 0 397 333
- FR-A- 2 463 024
- FR-A- 2 611 616
- FR-A- 2 632 579
- US-A- 4 759 580
- US-A- 4 836 597

## Description

La présente invention concerne un agencement pour le montage et le verrouillage en position montée d'un siège sur le plancher d'un véhicule automobile.

FR-A-2 611 616 décrit un agencement du type dans lequel un premier bord inférieur de la structure du siège comporte au moins deux ergots de montage dont chacun est reçu dans un trou de montage correspondant du plancher et qui définissent un axe d'articulation du siège, et dont un second bord inférieur comporte au moins un doigt qui, en position montée du siège, est reçu dans un logement complémentaire du plancher.

Ce type d'agencement d'un siège sur le plancher d'un véhicule automobile permet sa mise en place et son démontage de manière relativement aisée en permettant notamment de s'affranchir des problèmes d'alignement précis des moyens de fixation et d'accrochage et permet également d'effectuer un montage de façon automatisée.

On constate toutefois que l'agencement proposé dans ce document nécessite, à la fin de l'opération de mise en place et de montage du siège, de le fixer en position par une opération finale qui est longue et qui nécessite, tant lors de la mise en place que du démontage, l'utilisation d'un outil adapté.

EP-A-0 397 333 décrit un agencement pour le montage et le verrouillage en position montée d'un siège sur le plancher d'un véhicule automobile du type dans lequel un premier bord inférieur de la structure du siège comporte au moins deux ergots de montage dont chacun est reçu dans un trou de montage correspondant du plancher et qui définissent un axe d'articulation du siège et dont un second bord inférieur comporte au moins un doigt de verrouillage qui, en position montée du siège, s'étend selon une direction horizontale et est reçu dans un logement complémentaire du plancher, un dispositif de verrouillage à commande manuelle permettant de maintenir le doigt dans le logement, le doigt de verrouillage étant agencé au voisinage de la portion d'extrémité inférieure d'un pied du siège qui, en position montée, est reçue dans ledit logement du plancher.

Afin de remédier aux inconvénients évoqués plus haut, l'invention propose un agencement du type mentionné ci-dessus, caractérisé en ce que le doigt de verrouillage est reçu dans un trou formé dans une paroi verticale du plancher perpendiculaire à la direction horizontale du doigt et dans lequel il est maintenu par le dispositif de verrouillage, ledit logement du plancher étant délimité en partie par la paroi verticale trouée, en ce que l'épaisseur de la portion d'extrémité du pied selon la direction selon laquelle s'étend le doigt est inférieure à la largeur transversale du logement délimité par la paroi verticale trouée et par une paroi sensiblement parallèle de manière à permettre l'introduction dans le logement de la portion d'extrémité inférieure du pied et du doigt de verrouillage selon une direction sensiblement verticale, et en ce que le dispositif de verrouillage comporte une cale de verrouillage montée articulée sur la portion d'extrémité du pied entre une position escamotée et une position de verrouillage dans laquelle elle est adjacente à ladite portion d'extrémité, l'épaisseur de la portion d'extrémité du pied augmentée de l'épaisseur de la cale de verrouillage étant sensiblement égale à la largeur du logement.

Selon d'autres caractéristiques de l'invention :
- la cale est rappelée élastiquement vers sa position de verrouillage et elle comporte un levier de commande manuelle de la rotation de la cale vers sa position escamotée ;
- chacun des deux ergots de montage est susceptible d'être reçu dans deux trous du plancher agencés successivement selon une direction longitudinale perpendiculaire à l'axe d'articulation du siège, pour définir deux positions longitudinales de montage du siège, le plancher comportant deux logements complémentaires associés dont chacun est susceptible de recevoir le doigt de verrouillage dans l'une ou l'autre des deux positions de montage du siège ;
- chacun des ergots de montage présente un profil sensiblement en arc de cercle et coopère avec un ergot complémentaire présentant un profil sensiblement en arc de cercle agencé de manière à constituer une boucle ouverte d'articulation dont les branches opposées sont susceptibles d'être reçues alternativement et respectivement dans deux trous de montage du plancher ;
- le premier bord inférieur du siège est le bord avant du siège ;
- le doigt s'étend parallèlement à l'axe ;
- le doigt et les ergots s'étendent vers l'avant et la cale est adjacente à la face arrière du pied associé.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective qui illustre la partie basse de la structure d'un siège de véhicule automobile réalisée conformément aux enseignements de l'invention illustrée en regard de pièces complémentaires du plancher du véhicule ;
- les figures 2 et 3 sont des vues schématiques en section illustrant l'articulation du siège au moyen des ergots de montage ;
- la figure 4 est une vue en coupe transversale d'un des pieds arrière de la structure du siège illustré en position montée et verrouillée sur le plancher du véhicule ; et
- les figures 5, 6 et 7 sont des vues schématiques illustrant différentes positions de la structure du siège correspondant à différentes phases de montage.

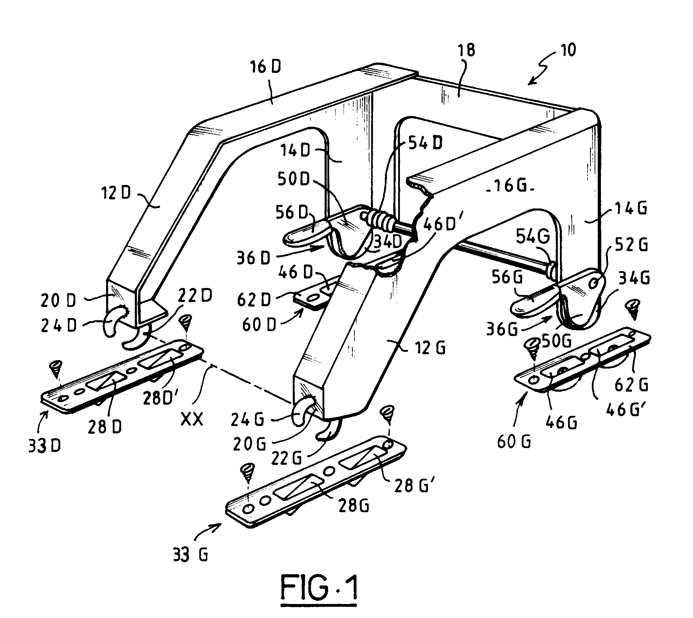

On reconnaît à la figure 1 une structure 10 d'un siège de véhicule automobile (non représenté en détail) qui est réalisée en tôle pliée et soudée.

La structure 10 est constituée pour l'essentiel par deux pieds avant 12G et 12D et par deux pieds arrière 14G et 14D reliés entre eux par deux longerons supérieurs 16G, 16D et par une traverse supérieure arrière 18.

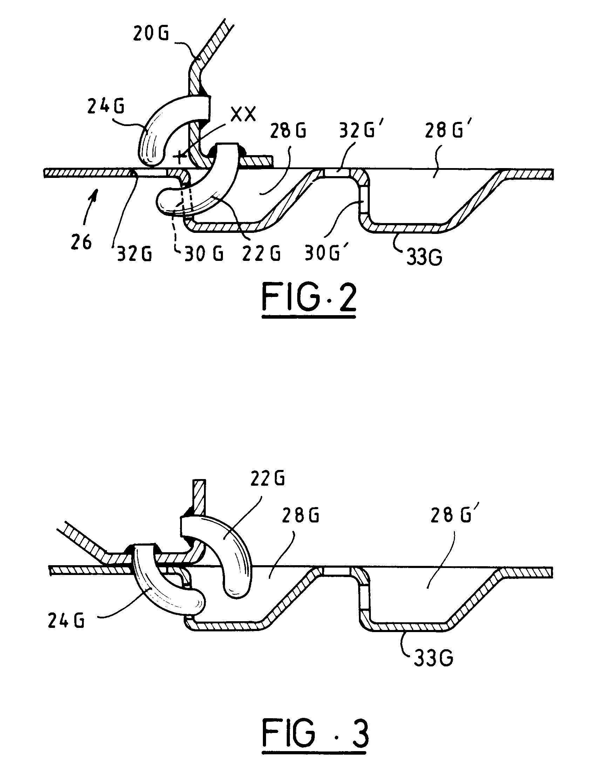

La portion d'extrémité inférieure 20G, 20D de chaque pied avant est équipée d'un ergot principal de montage et d'articulation 22G, 22D en forme d'arc de cercle et d'un ergot complémentaire, également en forme d'arc de cercle, 24G, 24D qui, comme on peut le voir aux figures 2 et 3, délimitent ensemble des boucles ouvertes de montage et d'articulation de la structure de siège 10 autour d'un axe d'articulation X-X.

A cet effet, le plancher 26 comporte des renfoncements 28G, 28D dans lesquels sont formés des trous de montage et d'articulation 30G, 32G et 30D, 32D.

Comme on peut le voir aux figures 2 et 3, chaque paire de trous d'articulation associé à une boucle de montage et d'articulation est constituée de deux trous formés respectivement dans deux portions de parois du plancher 26 perpendiculaires entre elles, l'une verticale et l'autre horizontale.

Les figures 2 et 3 illustrent les deux positions opposées maximales que le siège est susceptible d'occuper, c'est-à-dire la position montée à la figure 2 et la position basculée vers l'avant à la figure 3.

Grâce à cet agencement, la structure de siège 10 est ainsi susceptible de basculer autour de l'axe X-X.

La réalisation en boucle ouverte permet également la mise en place du siège sur le plancher en l'amenant sensiblement dans sa position d'utilisation.

Afin de définir deux positions longitudinales de montage de la structure de siège 10 sur le plancher, chaque renfoncement 28G, 28D est doublé d'un renfoncement identique 28G', 28D'.

Afin de ne pas compliquer de manière anormale la structure du plancher du véhicule et en faciliter ainsi la réalisation industrielle, les renfoncements qui reçoivent les ergots de montage et d'articulation sont réalisés respectivement dans des pièces rapportées 33G, 33D qui sont par exemple fixées par vissage sur le plancher du véhicule.

On décrira maintenant les moyens de verrouillage en position montée de la structure de siège 10.

A cet effet, la portion inférieure d'extrémité 34G, 34D de chacun des deux pieds arrière 14G, 14D est équipée d'un dispositif de verrouillage 36G, 36D.

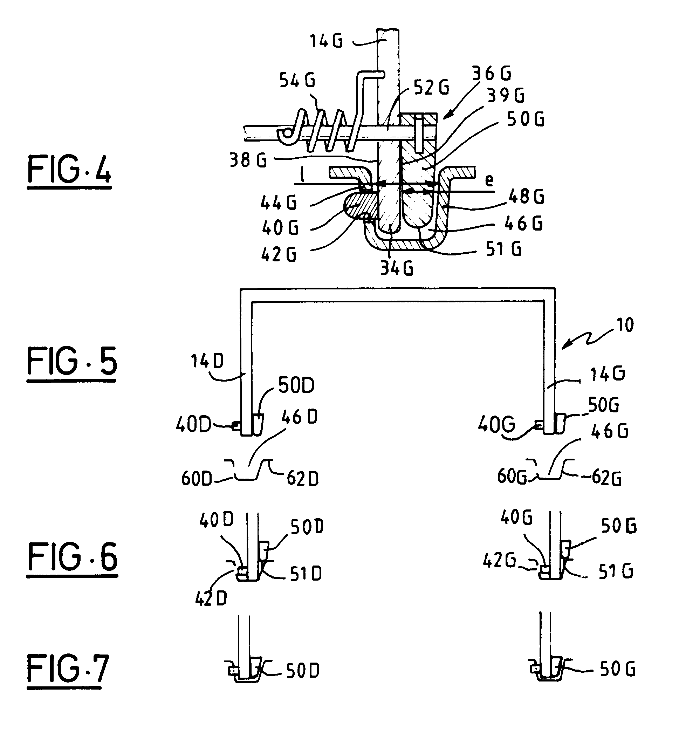

On décrira maintenant en détail, en se référant notamment à la figure 4, le dispositif de verrouillage du pied arrière gauche.

La portion d'extrémité inférieure 34G est une portion en tôle qui s'étend dans un plan perpendiculaire à l'axe d'articulation X-X et dont une première face 38G est munie d'un doigt de verrouillage 40G qui fait saillie transversalement depuis la face 38G selon une direction parallèle à l'axe X-X.

En position montée et verrouillée telle qu'elle est illustrée à la figure 4, le doigt de verrouillage 40G est reçu dans un trou de verrouillage 42G qui est formé dans une paroi sensiblement verticale 44G d'un logement 46G du plancher.

Le logement 46G est également délimité transversalement par une seconde paroi 48G sensiblement verticale et parallèle à la première 44G.

Comme on peut le voir à la figure 4, la largeur transversale moyenne "l" du logement 46G est légèrement supérieure à l'épaisseur transversale de la portion d'extrémité 34G du pied 14G augmentée par la longueur axiale du doigt de verrouillage 40G.

Ce dimensionnement a pour but de permettre l'introduction de la portion d'extrémité du pied et du doigt de verrouillage 40G selon une direction sensiblement verticale dans le logement 46G.

Le verrouillage en position du doigt 40G dans le trou 42G est assuré au moyen d'une cale de verrouillage 50G qui est montée articulée sur le pied 14G autour d'un axe 52G parallèle à l'axe d'articulation X-X.

La cale est susceptible de pivoter entre sa position de verrouillage illustrée aux figures 1 et 4 vers laquelle elle est rappelée élastiquement en rotation par un ressort 54G et une position décalée angulairement d'environ 90° par rapport à la position de verrouillage.

L'épaisseur transversale "e" de la cale 50G est choisie de manière que, ajoutée à l'épaisseur de la portion d'extrémité 34G du pied 14G, elle soit sensiblement égale à la largeur transversale "l" du logement 46G.

Grâce à ce dimensionnement, il est impossible de dégager transversalement le doigt de verrouillage 40G, vers la droite en considérant la figure 4, et la structure de siège 10 est ainsi maintenue en position montée et verrouillée.

La cale 50G est montée pivotante et adjacente à la seconde face 39G de la portion d'extrémité 34G du pied.

La cale 50G est équipée d'un levier 56G (voir fig.1) de commande manuelle de sa rotation autour de l'axe 52G à l'encontre de l'effort élastique de rappel qui lui est appliqué par le ressort 54G.

Le plancher du véhicule doit bien entendu comporter, pour chaque pied arrière, deux logements identiques 46G, 46G' agencés longitudinalement l'un derrière l'autre avec le même espacement longitudinal que les renfoncements pour les ergots qui équipent les pieds avant.

Les logements complémentaires 46G, 46G' et 46D, 46D' sont également réalisés dans des pièces rapportées 60G, 60D.

Le verrouillage de la structure de siège 10 s'effectue de la manière suivante.

Le siège étant présenté sur le plancher selon sa position d'utilisation, les ergots de montage et d'articulation 22G, 22D sont engagés dans leurs trous correspondants du plancher, la partie arrière du siège étant légèrement soulevée.

L'abaissement de cette partie arrière, en partant de la position illustrée à la figure 5, se traduit par une introduction verticale des pieds dans les logements complémentaires 46G et 46D.

Lors de cette introduction, les cales de verrouillage 50G et 50D sont escamotées automatiquement autour de leur axe d'articulation 52G, 52D comme cela est illustré à la figure 6, du fait de la coopération de leur bord inférieur profilé 51G, 51D avec la face supérieure 62G, 62D des pièces 60G, 60D.

La structure occupe alors la position illustrée à la figure 6 dans laquelle les doigts de verrouillage 40G, 40D sont en regard des trous de verrouillage 42G, 42D mais n'ont pas encore pénétré dans ces derniers.

Il ne reste plus alors à l'utilisateur qu'à provoquer un léger déplacement transversal de la structure de siège 10, vers la gauche en considérant la figure 6, pour provoquer la pénétration des doigts de verrouillage dans les trous de verrouillage et le rappel élastique automatique des cales de verrouillage 50G, 50D dans leur position respective de verrouillage schématisée aux figures 7 et correspondant au dessin de la figure 4.

Le démontage du siège s'effectue de manière inverse. Au cours de cette opération, l'opérateur commence par provoquer le pivotement des cales de verrouillage 50G, 50D vers leur position escamotée à l'aide de l'un ou l'autre des leviers de commande manuelle 56G ou 56D.

A partir de cette position escamotée, il peut dégager transversalement les doigts de verrouillage (40G, 40D) et provoquer le basculement du siège autour de son axe (X-X), par exemple pour l'amener en position verticale de dégagement comme visible à la figure 3.

En variante, les doigts s'étendent horizontalement vers l'avant, parallèlement aux ergots 22G, 22D, et sont verrouillables chacun dans un trou d'une paroi verticale avant d'un logement propre à recevoir la portion inférieure du pied associé et une cale escamotable adjacente à la face arrière de ce dernier.

## Revendications

1. Agencement pour le montage et le verrouillage en position montée d'un siège (10) sur le plancher (26) d'un véhicule automobile du type dans lequel un premier bord inférieur de la structure (10) du siège comporte au moins deux ergots de montage (22G, 22D) dont chacun est reçu dans un trou de montage correspondant (30G, 30D) du plancher et qui définissent un axe (X-X) d'articulation du siège et dont un second bord inférieur comporte au moins un doigt de verrouillage (40G, 40D) qui, en position montée du siège, s étend selon une direction horizontale et est reçu dans un logement complémentaire (46G, 46D) du plancher, un dispositif de verrouillage à commande manuelle (50G) permettant de maintenir le doigt dans le logement, le doigt de verrouillage (40G) étant agencé au voisinage de la portion d'extrémité inférieure (34G) d'un pied (14G) du siège (10) qui, en position montée, est reçue dans ledit logement (46G) du plancher, caractérisé en ce que le doigt de verrouillage (40G, 40D) est reçu dans un trou (42G, 42D) formé dans une paroi verticale (44G) du plancher perpendiculaire à la direction horizontale du doigt et dans lequel il est maintenu par le dispositif de verrouillage (50G), ledit logement (46G) du plancher étant délimité en partie par la paroi verticale trouée (44G), en ce que l'épaisseur de la portion d'extrémité (34G) du pied (14G) selon la direction selon laquelle s'étend le doigt est inférieure à la largeur transversale (l) du logement (46G) délimité par la paroi verticale trouée (44G) et par une paroi sensiblement parallèle (48G) de manière à permettre l'introduction dans le logement (46G) de la portion d'extrémité inférieure (34G) du pied (14G) et du doigt de verrouillage (40G) selon une direction sensiblement verticale, et en ce que le dispositif de verrouillage (36G) comporte une cale de verrouillage (50G) montée articulée sur la portion d'extrémité (34G) du pied entre une position escamotée et une position de verrouillage dans laquelle elle est adjacente à ladite portion d'extrémité (34G), l'épaisseur de la portion d'extrémité (34G) du pied (14G) augmentée de l'épaisseur (e) de la cale de verrouillage (50G) étant sensiblement égale à la largeur (l) du logement (46G).

2. Agencement selon la revendication 1, caractérisé en ce que la cale (50G) est rappelée élastiquement vers sa position de verrouillage et en ce qu'elle comporte un levier (56G) de commande manuelle de la rotation de la cale vers sa position escamotée.

3. Agencement selon la revendication 1 ou 2, caractérisé en ce que chacun des deux ergots de montage (22G) est susceptible d'être reçu dans deux trous (30G, 30G') du plancher agencés successivement selon une direction longitudinale perpendiculaire à l'axe (X-X) d'articulation du siège, pour définir deux positions longitudinales de montage du siège, et en ce que le plancher comporte deux logements complémentaires correspondants (46G, 46G') dont chacun est susceptible de recevoir le doigt de verrouillage dans l'une ou l'autre des deux positions de montage du siège.

4. Agencement selon l'une quelconque des revendications précédentes, caractérisé en ce que chacun des ergots de montage (22G, 22D) présente un profil sensiblement en arc de cercle et coopère avec un ergot complémentaire (24G, 24D) présentant un profil sensiblement en arc de cercle agencé de manière à constituer une boucle ouverte d'articulation dont les branches opposées sont susceptibles d'être reçues alternativement et respectivement dans deux trous de montage (30G, 32G, 30D, 32D) du plancher.

5. Agencement selon l'une quelconque des revendications précédentes, caractérisé en ce que le premier bord inférieur est le bord avant du siège (10).

6. Agencement selon l'une quelconque des revendications 1 à 5, caractérisé en ce que le doigt (40G) s'étend parallèlement à l'axe (X-X).

7. Agencement selon la revendication 5 prise en combinaison avec l'une des revendications 1 ou 2, caractérisé en ce que le doigt (40G) et les ergots (22G, 22D) s'étendent vers l'avant et la cale (50G) est adjacente à la face arrière du pied associé (14G).

## Claims

1. Layout for the fitting and locking in the fitted position of a seat (10) to the floor (26) of a car of the type in which a first lower edge of the seat structure (10) has at least two fitting lugs (22G, 22D), each being received in a corresponding fitting hole (30G, 30D) of the floor and which define an articulation axis (X-X) of the seat and whereof a second lower edge has at least one locking pin (40G, 40D) which, in the fitted position of the seat, extends in a horizontal direction and is received in a complimentary recess (46G, 46D) of the floor, a manually controlled locking device (50G) making it possible to maintain the pin in the recess, the locking pin (40G) being arranged in the vicinity of the lower end portion (34G) of a leg (14G) of the seat (10) which, in the fitted position, is received in said floor recess (46G), characterized in that the locking pin (40G, 40D) is received in a hole (42G, 40D) formed in a vertical wall (44G) of the floor perpendicular to the horizontal direction of the pin and in which it is maintained by the locking device (50G), said floor recess (46G) being partly defined by the vertical, perforated wall (44G), in that the thickness of the end portion (34G) of the leg (14G) in the direction in which extends the pin is less than the transverse width (1) of the recess (46G) defined by the vertical, perforated wall (44G) and by a substantially parallel wall (48G), so as to permit the introduction into the recess (46G) of the lower end portion (34G) of the leg (14G) and the locking pin (40G) in a substantially vertical direction and in that the locking device (36G) has a locking shim (50G) mounted in articulated manner on the end portion (34G) of the leg between a retracted position and a locking position in which it is adjacent to said end portion (34G), the thickness of the end portion (34G) of the leg (14G), increased by the thickness (e) of the locking shim (50G) being substantially equal to the width (1) of the recess (46G).

2. Layout according to claim 1, characterized in that the shim (50G) is drawn back elastically towards its locking position and in that it has a lever (56G) for the manual control of the rotation of the shim towards its retracted position.

3. Layout according to claim 1 or 2, characterized in that each of the two fitting lugs (22G) can be received in two holes (30G, 30G') of the floor arranged successively in a longitudinal direction perpendicular to the seat articulation axis (X-X), in order to define two longitudinal seat fitting positions, and in that the floor has two corresponding, complimentary recesses (46G, 46G'), each being able to receive the locking pin in one or other of the two seat fitting positions.

4. Layout according to any one of the preceding claims, characterized in that each of the fitting lugs (22G, 22D) has a substantially circular arc profile and cooperates with a complimentary lug (24G, 24D) having a substantially circular arc profile arranged so as to constitute an open articulation loop, whose opposite branches can be alternatively and respectively received in two fitting holes (30G, 32G, 30D, 32D) of the floor.

5. Layout according to any one of the preceding claims, characterized in that the first lower edge is the front edge of the seat (10).

6. Layout according to any one of the claims 1 to 5, characterized in that the pin (40G) extends parallel to the axis (X-X).

7. Layout according to claim 5, taken in combination with one of the claims 1 or 2, characterized in that the pin (40G) and the lugs (22G, 22D) extend towards the front and the shim (50G) is adjacent to the rear face of the associated leg (14G).

## Patentansprüche

1. Anordnung für die Montage und die Verriegelung in der montierten Position eines Sitzes (10) auf der Bodenplatte (26) eines Kraftfahrzeugs, wobei die Anordnung von einem Typ ist, bei dem eine erste Unterkante der Struktur (10) des Sitzes wenigstens zwei Montagevorsprünge (22G, 22D) enthält, wovon jeder in einem entsprechenden Montageloch (30G, 30D) der Bodenplatte aufgenommen ist und die eine Schwenkachse (X-X) des Sitzes definieren, und bei dem eine zweite Unterkante wenigstens einen Verriegelungszapfen (40G, 40D) enthält, der sich in der montierten Position des Sitzes in einer horizontalen Richtung erstreckt und in einem komplementären Aufnahmeraum (46G, 46D) der Bodenplatte aufgenommen ist, wobei eine Verriegelungsvorrichtung mit manueller Steuerung (50G) ermöglicht, den Zapfen im Aufnahmesitz zu halten, wobei der Verriegelungszapfen (40G) in der Nähe des unteren Endabschnitts (34G) eines Fußes (14G) des Sitzes (10) angeordnet ist, der in der montierten Position im Aufnahmeraum (46G) der Bodenplatte aufgenommen ist, dadurch gekennzeichnet, daß der Verriegelungszapfen (40G, 40D) in einem Loch (42G, 42D) aufgenommen ist, das in einer vertikalen Wand (46G) der Bodenplatte, die zur horizontalen Richtung des Zapfens senkrecht ist und in der er durch die Verriegelungsvorrichtung (50G) gehalten wird, wobei der Aufnahmeraum (46G) der Bodenplatte teilweise durch die mit Loch versehene vertikale Wand (44G) begrenzt ist, daß die Dicke des Endabschnitts (34G) des Fußes (14G) in der Richtung, in der sich der Zapfen erstreckt, kleiner als die transversale Breite (l) des Aufnahmeraums (46G) ist, welcher durch die mit Loch versehene vertikale Wand (44G) und durch eine im wesentlichen parallele Wand (48G) begrenzt ist, derart, daß die Einführung des unteren Endabschnitts (34G) des Fußes (14G) und des Verriegelungszapfens (40G) in einer im wesentlichen vertikalen Richtung möglich ist, und daß die Verriegelungsvorrichtung (36G) einen Verriegelungskeil (50G) enthält, der am Endabschnitt (34G) des Fußes zwischen einer eingefahrenen Position und einer Verriegelungsposition schwenkbar angebracht ist, in welcher er sich in der Nähe des Endabschnitts (34G) befindet, wobei die Dicke des Endabschnitts (34G) des Fußes (14G), erhöht um die Dicke (e) des Verriegelungskeils (50G), im wesentlichen gleich der Breite (l) des Aufnahmeraums (46G) ist.

2. Anordnung nach Anspruch 1, dadurch gekennzeichnet, daß der Keil (50G) in seine Verriegelungsposition elastisch zurückgestellt wird und daß er einen Hebel (56G) zur manuellen Steuerung der Drehung des Keils in seine eingefahrene Position enthält.

3. Anordnung nach Anspruch 1 oder 2, dadurch gekennzeichnet, daß jeder der beiden Montagevorsprünge (22G) in zwei Löchern (30G, 30G') der Bodenplatte aufgenommen werden kann, die in einer zur Schwenkachse (X-X) des Sitzes senkrechten, longitudinalen Richtung hintereinander angeordnet sind, um zwei longitudinale Montagepositionen des Sitzes zu definieren, und daß die Bodenplatte zwei entsprechende komplementäre Aufnahmeräume (46G, 46G') enthält, wovon jeder den Verriegelungszapfen in der einen oder der anderen der beiden Montagepositionen des Sitzes aufnehmen kann.

4. Anordnung nach irgendeinem der vorangehenden Ansprüche, dadurch gekennzeichnet, daß jeder der Montagevorsprünge (22G, 22D) ein Profil aufweist, das im wesentlichen kreisbogenförmig ist, und mit einem komplementären Vorsprung (24G, 24D) zusammenwirkt, der ein im wesentlichen kreisbogenförmiges Profil aufweist und in der Weise angeordnet ist, daß eine offene Schwenkspange gebildet wird, deren gegenüberliegende Arme alternativ und entsprechend in zwei Montagelöchern (30G, 32G, 30D, 32D) der Bodenplatte aufgenommen werden können.

5. Anordnung nach irgendeinem der vorangehenden Ansprüche, dadurch gekennzeichnet, daß die erste Unterkante die Vorderkante des Sitzes (10) ist.

6. Anordnung nach irgendeinem der Ansprüche 1 bis 5, dadurch gekennzeichnet, daß sich der Zapfen (40G) parallel zur Achse (X-X) erstreckt.

7. Anordnung nach Anspruch 5 in Verbindung mit einem der Ansprüche 1 oder 2, dadurch gekennzeichnet, daß sich der Zapfen (40G) und die Vorsprünge (22G, 22D) nach vorn erstrecken und der Keil (50G) an die hintere Fläche des zugehörigen Fußes (14G) angrenzt.
